# EUROPÄISCHE PATENTSCHRIFT

(11) **EP 2 408 553 B1**
(45) Veröffentlichungstag und Bekanntmachung des Hinweises auf die Patenterteilung: **19.05.2021**
(21) Anmeldenummer: 10709509.3
(22) Anmeldetag: 17.03.2010
(51) Int. Cl.: B01J 19/32

(54) **STOFFAUSTAUSCHAPPARAT MIT EINER STRUKTURIERTEN PACKUNG**
Package assembly for a structured package
Installation d'emballage pour un emballage structuré

(30) Priorität: 18.03.2009 EP 09155551
(43) Veröffentlichungstag der Anmeldung: 25.01.2012
(73) Patentinhaber: Sulzer Management AG, 8401 Winterthur (CH)
(72) Erfinder: AUSNER, Ilja, 78337 Öhningen (DE); DUSS, Markus, CH-8405 Winterthur (CH); PLÜSS, Raymond, CH-8451 Kleinandelfingen (CH)
(74) Vertreter: Henkel & Partner mbB
(86) Internationale Anmeldenummer: PCT/EP2010/053491
(87) Internationale Veröffentlichungsnummer: WO 2010/106119

(56) Entgegenhaltungen:
- WO-A2-94/12258
- CN-A- 1 054 018
- DE-B1- 2 219 130
- GB-A- 1 203 416
- US-A- 3 281 307
- US-A- 3 887 664
- US-A- 4 668 443

## Beschreibung

Die Erfindung betrifft eine strukturierte Packung sowie einen Stoffaustauschapparat, welcher eine derartige strukturierte Packung enthält, beispielsweise eine Absorptionskolonne oder eine Desorptionskolonne.

Strukturierte Packungen sind in einer handelsüblichen Ausführungsform als gefaltete, hintereinander angeordnete Bleche ausgeführt, deren Struktur geneigte und sich immer wieder kreuzende Kanäle aufweist. Diese Kanäle beeinflussen die Strömungen von Gas- und Flüssigphase innerhalb der Packung positiv und begünstigen den Stofftransport zwischen den Phasen. Das heisst, in den Kanälen der Packung werden Gas- und Flüssigphase in Kontakt gebracht und somit der Stofftransport zwischen den Phasen begünstigt.

Um die Trennleistung einer strukturierten Packung zu steigern, wird üblicherweise die Oberfläche der strukturierten Packung vergrössert, was zumeist durch eine höhere Anzahl an Lagen und/oder engere Kanalgeometrien erreicht wird. Diese Massnahmen führen allerdings zu einer Erhöhung des Druckabfalls in der strukturierten Packung. Daraus folgt aber, dass zur Verringerung des Druckabfalls weniger Packungsoberfläche vorgesehen werden muss, wodurch sich die Trennleistung verschlechtert, also die Effizienz der Packung. Zudem können offenere Kreuzungskanäle vorgesehen werden. Offenere Kreuzungskanäle bedeutet, dass der Neigungswinkel der Kanäle bezogen auf die Hauptströmungsrichtung geringer gewählt wird. Das bedeutet, dass je nach Anwendungsfall ein Optimum zwischen Druckabfall und bestmöglicher Trennleistung gefunden werden muss.

Die sich kreuzenden Kanäle weisen jedoch viele Kontaktstellen auf, die sich in einigen Anwendungen positiv in anderen Anwendungen auch negativ auswirken können.

Stromabwärts der Kontaktstellen, gesehen in Richtung der strömenden Flüssigkeit können sich Totzonen ausbilden, in denen die Flüssigkeit in geringerem Mass am Stoffaustausch beteiligt ist, als die restliche Flüssigkeit, die sich auf der strukturierten Packung befindet. Dieses Phänomen ist bereits aus US 6'378'332 B1 bekannt, in welcher eine Packung für die kryogene Rektifikation beschrieben wird, die das Auftreten solcher Totzonen reduzieren soll. Die Lösung gemäss US 6'378'332 B1, liegt darin, die Anzahl der Kontaktstellen zwischen den Lagen durch abwechselnd hohe und weniger hohe Faltungen jeder Einzellage zu reduzieren.

Aus der US 6'378'332 B1 ist somit ein Rektifikationsverfahren bekannt, in welchem eine strukturierte Packung verwendet wird, welche eine Kreuzkanalstruktur aufweist, das heisst aus gewellten oder gefalteten Blechen besteht, die kreuzweise übereinander gelegt sind. Benachbarte Bleche berühren sich längs der Wellenberge bzw. Kanten. Zwischen den gefalteten Blechen kann ein leichter flüchtiges Fluid, insbesondere eine Gasphase, im Gegenstrom zu einem schwerer flüchtigen Fluid, insbesondere eine Flüssigphase, strömen, wobei ein Stoffaustausch stattfinden kann. In der US 6'378'332 B1 wird ein Verfahren gezeigt, um die Anzahl der Kontaktpunkte zwischen zwei benachbarten Blechen zu reduzieren. Hierzu wird vorgesehen, die Höhe der Wellenberge oder Kanten derart zu variieren, dass nur noch ein Teil der Wellenberge oder Kanten jedes Blechs die maximale Höhe aufweist. Die Bleche berühren einander somit nur entlang der Wellenberge oder Kanten mit maximaler Höhe.

Ein Nachteil der gemäss US 6'378'332 B1 vorgeschlagenen Packung besteht in ihrer ungenügenden mechanischen Stabilität. Ausserdem wird das durch die Packung ausgefüllte Volumen wegen der zum Teil weniger hohen Faltungen nicht optimal mit geometrischer Austauschfläche ausgefüllt, das heisst diese konstruktive Ausgestaltung geht mit einem Verlust an Stoffaustauschfläche einher.

Aus der DE 22 19 130 B1 ist ein Kontaktkörper bekannt, bei dem eine erste und zweite Lage einer strukturierten Packung, welche ein wellenartiges Profil aufweisen, derart übereinander angeordnet sind, dass sich die Kanäle kreuzen, die durch die wellenartigen Profile gebildet sind. Das wellenartige Profil der Lagen weist stets scharfe Kanten auf.

In der WO 94/12258 A1 wird eine Kreuzkanalpackung offenbart, deren Platten Reliefs aufweisen, welche es erlauben, dass die Platten an den Kreuzungspunkten der Lagen näher zusammenkommen, so dass sich deren Abstand verringert.

Aufgabe der Erfindung ist daher eine strukturierte Packung bereitzustellen, die bei gleicher oder geringerer Anzahl der Kontaktpunkte eine verbesserte Stabilität aufweist.

Eine weitere Aufgabe der Erfindung besteht darin, den Stoffaustausch insbesondere in einem flüssigseitig kontrollierten Absorber oder Desorber zu verbessern.

Die Lösung besteht in einem Absorber oder Desorber gemäß dem Patentanspruch 1. Dieser enthält eine erste Lage für eine strukturierte Packung. Die erste Lage für die strukturierte Packung weist ein erstes wellenartiges Profil auf, wobei durch das wellenartige Profil eine Mehrzahl offener Kanäle ausgebildet ist. Die Kanäle umfassen ein erstes Wellental, einen ersten Wellenberg und einen zweiten Wellenberg, wobei der erste Wellenberg und der zweite Wellenberg das erste Wellental begrenzen, wobei der erste und der zweite Wellenberg einen ersten gerundeten Scheitel und einen zweiten gerundeten Scheitel aufweisen. Auf dem ersten Scheitel des ersten Wellenbergs ist eine sich in Richtung des ersten Scheitels erstreckende Einbuchtung ausgebildet, wobei das erste Wellental einen gerundeten Talgrund aufweist, wobei der Normalabstand zumindest eines Punktes der Einbuchtung zum Talgrund des Wellentals kleiner ist als der Normalabstand des ersten Scheitels zum Talgrund des Wellentals. Auf dem zweiten Scheitel ist eine zweite Einbuchtung (44) angeordnet und auf dem Talgrund ist eine dritte Einbuchtung angeordnet, wobei die ersten, zweiten und dritten Einbuchtungen als linsenförmige Delle ausgebildet sind. Die Tiefe jeder Einbuchtung liegt im Bereich von 10 bis 30% der Lagenhöhe, so dass sich Spalten zwischen den einzelnen Packungslagen von eben diesem Wertebereich ergeben.

Des weiteren ist eine zweite Lage vorgesehen, wobei die zweite Lage ein zweites wellenartiges Profil aufweist, wobei die erste Lage und die zweite Lage derart angeordnet sind, dass sich die Kanäle der ersten Lage mit den Kanälen der zweiten Lage kreuzen. Die erste Lage steht mit der zweiten Lage in berührendem Kontakt, wobei der berührende Kontakt im Bereich jeder der Einbuchtung unterbrochen ist.

Somit ergibt sich durch die Einbuchtungen die Schaffung einer zusätzlichen Möglichkeit für die Führung der Flüssigkeitsströmung, sowie einer Anordnung der Kontaktstellen, die eine maximale Flüssigkeitsbenetzung der Packungsoberfläche ermöglicht.

Auf dem zweiten Scheitel ist eine zweite Einbuchtung und auf dem ersten Talgrund ist eine dritte Einbuchtung angeordnet. Selbstverständlich können auf der Lage eine Mehrzahl von ersten, zweiten oder dritten Einbuchtungen vorgesehen sein.

Jede Lage kann eine erste Randbegrenzung, sowie eine zweite Randbegrenzung umfassen, wobei die erste Randbegrenzung im wesentlichen parallel zur zweiten Randbegrenzung angeordnet ist. Insbesondere kann eine Mehrzahl von Einbuchtungen zwischen der ersten Randbegrenzung und der zweiten Randbegrenzung angeordnet sein.

Zur Verbesserung der Stabilität bei gleicher oder geringerer Anzahl der Kontaktpunkte weist die Lage ein wellenartiges Profil auf, wobei die Wellenhöhe im wesentlichen konstant ist.

Nach einem bevorzugten Ausführungsbeispiel ist zumindest ein Teil der Scheitel als Kante und/oder zumindest ein Teil der Wellentäler v-förmig ausgebildet.

Eine strukturierte Packung umfasst somit eine erste Lage nach einem der vorhergehenden Ausführungsbeispiele und eine zweite Lage, wobei die zweite Lage ein wellenartiges Profil wie die erste Lage aufweist, wobei die erste Lage und die zweite Lage derart angeordnet sind, dass sich die Kanäle der ersten Lage mit den Kanälen der zweiten Lage kreuzen. Die erste Lage steht mit der zweiten Lage in berührendem Kontakt, bevorzugt indem sich die Scheitel der Wellenberge der ersten Lage und die Scheitel der Wellentäler der zweiten Lage berühren.

Die Einbuchtungen können auf jeder der ersten und zweiten Lagen angeordnet sein. Durch die Einbuchtungen ist der Kontakt der ersten Lage mit der zweiten Lage unterbrochen.

Eine erfindungsgemässe Packung besteht aus strukturierten Lagen, deren Faltungen alle gleichmässig hoch sind. Hierdurch wird eine hohe Stabilität der Packung gewährleistet, die besonders in Kolonnen mit grossem Durchmesser von besonderer Bedeutung ist. Die Reduktion der Anzahl der Kreuzungspunkte der einzelnen Lagen wird erfindungsgemäss durch das Einbringen von Einbuchtungen realisiert. Diese Einbuchtungen sind als linsenförmige Dellen ausgebildet, die zum Beispiel durch plastische Verformung des Scheitels der Lage anbringbar sind. Die Einbuchtungen werden an bestimmen Stellen auf die gefalteten Packungslagen aufgebracht und somit sind die Packungslagen in einem definierten Abstand und an definierten Stellen voneinander trennbar.

Als Alternative könnten die Einbuchtungen in die Packungslage durch Vorsehen eines Hohlraums, in welchem ein Einsatzelement anbringbar ist ausgestaltet sein.

Des weiteren kann sich zumindest ein Teil der Einbuchtungen über eine Länge erstrecken, die bis zu 75% der Länge des Scheitels beträgt. Die Einbuchtung ist vorteilhafterweise innerhalb zumindest einer der ersten oder zweiten Randbegrenzungen angeordnet, sodass der Randbereich für eine erhöhte Formstabilität der Packung ausgebildet ist.

Jede der Einbuchtungen kann durch eine Erhebung unterbrochen sein. Die Einbuchtungen der ersten Lage können mit den Einbuchtungen der zweiten Lage zumindest teilweise überlappend angeordnet sein.

Die Einbuchtung kann eine Zwischenerhebung umfassen, insbesondere wenn sich die Einbuchtung um bis zu 75% der Länge des Scheitels erstreckt. Die Zwischenerhebung kann auf dem Scheitel der benachbarten Lage aufliegen oder in einem Abstand zu derselben angeordnet sein.

Jede der Lagen kann eine Öffnung enthalten. Eine derartige Öffnung kann den Durchtritt von Gas und/oder Flüssigkeit auf eine benachbarte Lage erleichtern. Derartige Öffnungen können im Wandbereich der Faltung, auf den Scheiteln der Wellenberge oder Wellentäler oder auch im Bereich der Einbuchtungen angeordnet sein.

Nach Möglichkeit erfolgt die Herstellung der Einbuchtung gemeinsam mit der Herstellung der Lage durch ein Umformverfahren. Somit kann die Herstellung der Lage mit einer minimalen Anzahl an Prozessschritten erfolgen. Hierzu können die Einbuchtungen an definierten Stellen, z.B. an der Ober- und Unterkante der Packungslage, durch Eindrücken, Einprägen oder Tiefziehen aus dem Blech herausgearbeitet werden. Beim Übereinanderlegen der einzelnen Lagen berühren sich die Kanäle jeweils im Bereich der Einbuchtungen nicht. In zumindest je zwei der Randbereiche entweder an der Ober- und Unterkante der Lage oder an den Seitenkanten der Lage befinden sich keine Einbuchtungen, sodass genügend Kontaktstellen vorhanden sind, um benachbarte Lagen in dem durch die Wellenhöhe definierten Abstand voneinander zu halten. Durch das Vorsehen einer Mehrzahl von Einbuchtungen innerhalb jedes der Randbereiche wird eine deutliche Reduktion der Kontaktstellen bewirkt sowie eine Maximierung der benetzten Packungsoberfläche bei gleichzeitiger Stabilität der einzelnen Lagen und damit auch des Packungskörpers, der aus einer Mehrzahl von Lagen besteht.

Der Abstand benachbarter Packungslagen bleibt konstant, auch wenn die Einbuchtungen sich auf Scheiteln befinden, welche die offenen Kanäle begrenzen. Unter Scheitel kann sowohl ein Wellenberg als auch eine Kante verstanden werden, also eine Spitze, die durch zwei benachbarte Seitenflächen eines Kanals ausgebildet ist.

Für die Reinigung eines leichter flüchtigen Fluids, insbesondere eines Gases, erfolgt der Stoffaustausch in mehreren sequentiell ablaufenden Teilschritten. Die im Gas enthaltenen Komponenten, die abgetrennt werden müssen, werden durch Konvektion und Diffusion an die Grenzfläche zur Flüssigkeit transportiert. Anschliessend müssen die Komponenten die Grenzfläche passieren und in der Flüssigkeit aufgenommen werden. Damit der Stoffaustausch verbessert werden kann, ist es vorteilhaft, eine möglichst grosse Stoffaustauschfläche für die Flüssigkeit vorzusehen.

Eine weitere Aufgabe der Erfindung besteht darin, die Anordnung der Kontaktpunkte derart zu wählen, dass es durch die Kontaktpunkte zu einer minimalen Veränderung des Stoffaustauschs kommt.

Insbesondere sind in der Vorrichtung nach einem der vorhergehenden Ausführungsbeispiele die Kontaktpunkte vermehrt im Randbereich der ersten Lage angeordnet. Im Gegensatz zum Stand der Technik, nach welchem eine immer noch gleichmässige Verteilung der Kontaktpunkte angestrebt wird, die Anzahl der Kontaktpunkte aber verringert wird, kann in der Erfindung auf diese gleichmässige Verteilung der Kontaktpunkte über der Oberfläche der Packung verzichtet werden. Werden somit die wenigen Kontaktstellen enger zusammen gelegt, bewirkt die Strömungsverengung eine Rückströmung hinter den Kontaktstellen, wodurch die unbenetzte Fläche hinter der Kontaktstelle reduziert wird. Demzufolge ergeben sich wenige Kontaktstellen mit weniger unbenetzter Fläche und in der Summe ein minimales Verhältnis aus unbenetzter zu gesamter Packungsoberfläche.

Nach einem vorteilhaften Ausführungsbeispiel der Vorrichtung befinden sich eine Mehrzahl von Einbuchtungen auf jeder der Lagen. In diesem Fall sind alle Lagen gleich aufgebaut, was den Herstellungsaufwand reduziert. Die Lagen können in dieser Form kontinuierlich hergestellt werden, indem ein Band kontinuierlich gefaltet wird, währenddessen auch die Einbuchtungen erzeugt werden. Das gefaltete und mit Einbuchtungen versehene Band wird auf die gewünschten Abmessungen zugeschnitten. Die zugeschnittenen Bandteile ergeben die Lagen, wobei jede zweite Lage gekehrt wird, sodass eine kreuzweise Anordnung von Lagen entsteht, wenn sie benachbart zueinander aufeinander gelegt werden.

Ein Stoffaustauschapparat, insbesondere eine Kolonne kann eine strukturierte Packung nach einem der vorhergehenden Ansprüche umfassen.

Ein Verfahren zur Reinigung von Fluiden in einem Stoffaustauschapparat, welcher eine strukturierte Packung enthält, umfasst die Schritte: Zuführen eines schwerer flüchtigen Fluids zu dem Stoffaustauschapparat, Verteilen des zugeführten schwerer flüchtigen Fluids über der Oberfläche der Packung, Zuführen eines leichter flüchtigen Fluids in den Stoffaustauschapparat in einen Fluideintrittsbereich, Verteilen des leichter flüchtigen Fluids im Gaseintrittsbereich über die Oberfläche der Packung, wobei das leichter flüchtige Fluid im Gegenstrom zur Flüssigkeit strömt, Sammeln des leichter flüchtigen Fluids, welches die Packung verlässt in einem Fluidaustrittsbereich, wobei die strukturierte Packung eine erste Lage und eine zweite Lage enthält, wobei die erste Lage und die zweite Lage ein wellenartiges Profil mit konstanter Wellenhöhe aufweisen, wobei durch das wellenartige Profil offene Kanäle ausgebildet sind, wobei sich die Kanäle der ersten Lage mit den Kanälen der zweiten Lage kreuzen, wobei das leichter flüchtige Fluid durch die Kanäle vom Fluideintrittsbereich in Richtung des Fluidaustrittsbereichs strömt, wobei das schwerer flüchtige Fluid das durch die Kanäle strömende leichter flüchtige Fluid umgibt und entlang der Kanalwände strömt. Die erste Lage steht mit der zweiten Lage über die Scheitel der Wellenberge in berührendem Kontakt, sodass ein Stoffaustausch zwischen dem leichter flüchtigen Fluid und dem schwerer flüchtigen Fluid über die durch die Kanäle gebildete Stoffaustauschfläche erfolgt.

Durch Verwendung von Einbuchtungen sowie einer Anordnung der Kontaktstellen wird eine maximale Flüssigkeitsbenetzung der Packungsoberfläche in Stoffaustauschapparaten ermöglicht.

Vorzugsweise besteht die Packung aus strukturierten Lagen, deren Faltungen alle gleichmässig hoch sind. Hierdurch wird eine hohe Stabilität der Packung erzeugt, die besonders in Kolonnen mit grossem Durchmesser von besonderer Bedeutung ist. Die Anzahl der Kreuzungspunkte zwischen den einzelnen Lagen wird erfindungsgemäss durch das Einbringen von Einbuchtungen an den Scheiteln von Wellenbergen zumindest je einer von zwei benachbarten Lagen reduziert.

Nachfolgend wird die Erfindung anhand der Zeichnungen erläutert. Es zeigen:
- Fig. 1: eine Ansicht einer Vorrichtung umfassend eine Mehrzahl von Packungslagen,
- Fig. 2a: eine Schnittdarstellung durch zwei benachbarte Packungslagen
- Fig. 2b: eine Ansicht von zwei benachbarten Packungslagen mit gewelltem Profil gemäss der Erfindung,
- Fig. 3: eine Darstellung einer konventionellen Packungslage unter Angabe des Strömungswegs des schwererflüchtigen Fluids,
- Fig. 4: eine Darstellung der Knotenpunkte nach der Lösung gemäss des Standes der Technik,
- Fig. 5: eine Darstellung der Knotenpunkte gemäss eines ersten Ausführungsbeispiels der Erfindung,
- Fig. 6: eine Darstellung der Knotenpunkte gemäss eines weiteren Ausführungsbeispiels der Erfindung,
- Fig. 7a: eine Darstellung einer Variante der Anordnung der erfindungsgemässen Einbuchtungen auf einer Lage in der Perspektive,
- Fig. 7b: eine Ansicht der Lage gemäss Fig. 7a in Richtung der Faltung,
- Fig. 8a: eine Veranschaulichung der Verformung der Packung nach dem Stand der Technik unter Querbelastung,
- Fig. 8b: eine Veranschaulichung der Verformung der erfindungsgemässen Packung unter Querbelastung,
- Fig. 9: eine Darstellung einer Absorptionsanlage als Anwendungsbeispiel für die Erfindung.
- Fig. 10: Messwerte für den NTUM Wert für ein gasseitig kontrolliertes Absorptionssystem oder Desorptionssystem
- Fig. 11: Messwerte für den NTUM Wert für ein flüssigseitig kontrolliertes Absorptionssystem oder Desorptionssystem

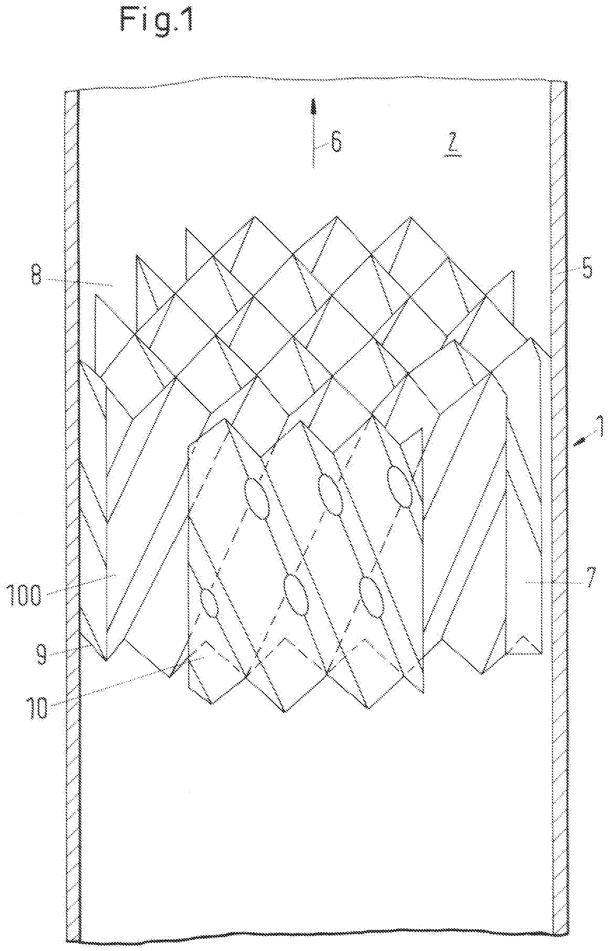

Fig. 1 zeigt eine Vorrichtung 1 umfassend einige Lagen einer strukturierten Packung 7, welche einen Packungskörper ausbilden. Als strukturierte Packung 7 wird ein Mittel zum Stoffaustausch zwischen zwei fluiden Phasen verstanden. Die strukturierte Packung 7 wird in einem Stoffaustauschapparat 2 verwendet. Der Stoffaustauschapparat kann insbesondere als eine Kolonne 5 ausgeführt sein, welche für eine Absorption oder Desorption eingesetzt werden kann.

Die strukturierte Packung 7 besteht aus einer Mehrzahl von Lagen, die zueinander in einer sich regelmässig wiederholenden geometrischen Beziehung stehen. Als Beispiel für diese geometrische Beziehung kann der Abstand benachbarter Lagen gewählt werden. Gemäss der geometrischen Beziehung können die Abstände benachbarter Lagen voneinander periodisch den selben Wert annehmen, sodass aus der Summe der Lagen eine Struktur entsteht, die durch gleiche oder zumindest periodisch gleiche Abstände gekennzeichnet ist. Die Periodizität findet sich in der gesamten strukturierten Packung, wodurch die Packung eine regelmässige Struktur erhält. Insbesondere kann die Struktur als wellenartiges Profil ausgebildet sein.

Im Unterschied dazu bestehen Schüttfüllkörperpackungen aus Schüttfüllkörpern, das heisst aus Elementen von gleichem geometrischen Aufbau, wobei aber jeder Schüttfüllkörper zu benachbarten Schüttfüllkörpern beliebige Abstände aufweisen kann, somit eine Periodizität dieser Abstände nicht erkennbar ist. Die Schüttfüllkörper werden als Schüttung in die Kolonne eingebracht. Sie bilden ein Haufwerk auf einem Kolonnenboden aus. Das Haufwerk ist gekennzeichnet durch die zufällige Anordnung der einzelnen Schüttfüllkörper.

Die Lagen gemäss Fig. 1 bestehen aus dünnwandigen Elementen, die ein wellenartiges Profil aufweisen. Das wellenartige Profil ist gekennzeichnet durch eine sich periodisch wiederholende Folge von Erhebungen, also Wellenbergen und talartigen Senken, also Wellentälern. Dieses wellenartige Profil kann insbesondere als Faltung mit einem Zick-Zackprofil mit spitz zulaufenden Kanten ausgebildet sein. Die Lagen werden so zueinander angeordnet, dass die wellenartigen Profile von zwei benachbarten Lagen in einem Winkel zu der Hauptströmungsrichtung geneigt sind. Die wellenartigen Profile benachbarter Lagen sind zueinander kreuzweise angeordnet.

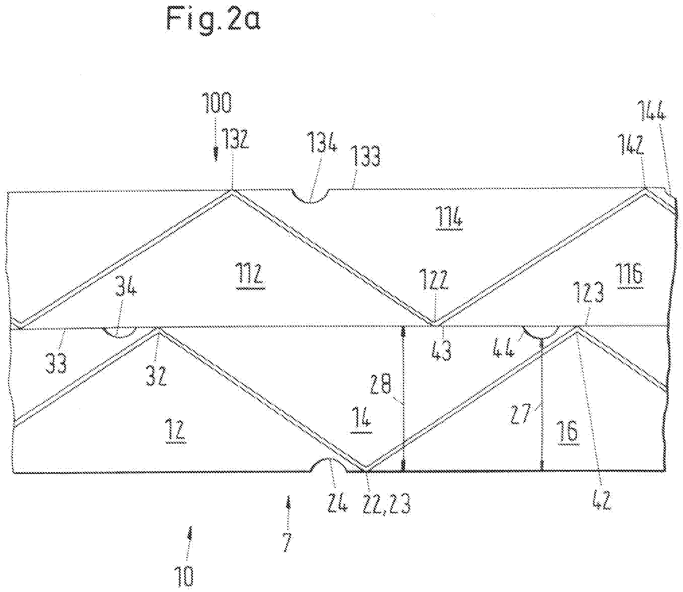

Fig. 2a zeigt zwei benachbarte Lagen 10, 100 der strukturierten Packung 7 gemäss Fig. 1. Eine erste Lage 10 ist benachbart zu einer zweiten Lage 100 angeordnet. Die erste Lage 10 und die zweite Lage 100 können insbesondere ein Element aus Blech oder Metallgewebe umfassen, alternativ dazu aber auch Elemente aus Kunststoff oder Keramik umfassen. Ein Element kann dabei die gesamte Lage umfassen, oder aber auch nur einen Teil derselben bilden. Das Element kann die Form einer Platte aufweisen, die ein wellenartiges Profil, insbesondere ein zick-zack Profil oder ein wellenartiges Profil mit gerundeten Spitzen und Talgründen umfasst. Das Element kann Beschichtungen aus Kunststoffen oder Keramik aufweisen, um die Beständigkeit der Lage gegen chemische Einflüsse, wie beispielsweise Korrosion oder thermische Einflüsse, wie beispielsweise Temperatur, oder mechanische Einflüsse, wie beispielsweise Druck, beständiger zu machen.

Die erste Lage 10 und die zweite Lage 100 in der Fig. 2a sind in einer Ansicht dargestellt, welche einen Ausschnitt aus der ersten Oberfläche 8 der Packung 7 zeigt. Die erste Oberfläche 8 der Packung 7 ist im wesentlichen normal zur Hauptströmungsrichtung 6 angeordnet. Mit Hauptströmungsrichtung 6 wird die Strömungsrichtung bezeichnet, in welcher ein leichter flüchtiges Fluid, insbesondere ein Gas in der Kolonne ohne Einbauten nach oben, also in Richtung des Kopfes der Kolonne 5, strömt. Alternativ dazu kann als Hauptströmungsrichtung auch die entgegengesetzte Richtung definiert werden. In diesem Fall entspricht die Hauptströmungsrichtung der Richtung, in die ein schwerer flüchtiges Fluid, das heisst zumeist eine Flüssigkeit die Kolonne ohne Einbauten, also im freien Fall, durchströmt. In der Packung weicht die Strömungsrichtung lokal von der Hauptströmungsrichtung ab, da die Strömung durch die Lagen der Packung umgelenkt wird.

Die erste Lage 10 der strukturierten Packung 7 weist ein wellenartiges Profil auf, wobei durch das wellenartige Profil eine Mehrzahl offener Kanäle 12, 14, 16 ausgebildet ist. Die Kanäle umfassen ein erstes Wellental 22, einen ersten Wellenberg 32 und einen zweiten Wellenberg 42. Der erste Wellenberg 32 und der zweite Wellenberg 42 begrenzen das erste Wellental 22. Der erste Wellenberg 32 und der zweite Wellenberg 42 weisen einen ersten Scheitel 33 und einen zweiten Scheitel 43 auf. Auf dem zweiten Scheitel 43 des zweiten Wellenbergs 42 ist ein sich in Richtung des zweiten Scheitels 43 erstreckende Einbuchtung 44 ausgebildet. Das erste Wellental 22 weist einen Talgrund 23 auf. Das erste Wellental 22 weist einen Talgrund 23 auf, wobei der Normalabstand 27 zumindest eines Punktes der Einbuchtung 34 zum Talgrund 23 des Wellentals 22 kleiner ist als der Normalabstand des ersten Scheitels 33 zum Talgrund 23 des Wellentals 22.

Der Normalabstand zwischen dem ersten Scheitel 33 des ersten Wellenbergs 32 und dem Talgrund 23 des ersten Wellentals 22 wird als Wellenhöhe 28 bezeichnet. Die Wellenhöhe 28 ist demnach grösser als der Normalabstand 27. In einer Lage gemäss dieser Erfindung ist die Wellenhöhe 28 insbesondere im wesentlichen konstant, das heisst, sie liegt im Bereich der üblichen Toleranzen, die im Bereich von 0.5 mm liegen.

Auch auf dem ersten Scheitel 33 kann eine erste Einbuchtung 34 angeordnet sein. Wahlweise kann auch auf dem ersten Talgrund 23 eine zweite Einbuchtung 24 angeordnet sein.

Die zweite Lage 100 der strukturierten Packung 7 weist ein wellenartiges Profil auf, wobei durch das wellenartige Profil eine Mehrzahl offener Kanäle 112, 114, 116 ausgebildet ist. Die Kanäle umfassen ein erstes Wellental 122, einen ersten Wellenberg 132 und einen zweiten Wellenberg 142. Der erste Wellenberg 132 und der zweite Wellenberg 142 begrenzen das erste Wellental 122. Der erste Wellenberg 132 und der zweite Wellenberg 142 weisen einen ersten Scheitel 133 und einen zweiten Scheitel 143 auf. Auf dem ersten Scheitel 133 des ersten Wellenbergs 132 ist ein sich in Richtung des ersten Scheitels 133 erstreckende Einbuchtung 134 ausgebildet. Auf dem zweiten Scheitel 143 des zweiten Wellenbergs 142 ist eine sich in Richtung des zweiten Scheitels 143 erstreckende Einbuchtung 144 ausgebildet. Das erste Wellental 122 weist einen Talgrund 123 auf. Die Einbuchtung 134 und die Einbuchtung 144 weist einen kleineren Normalabstand vom Talgrund 123 des Wellentals 122 hat als der zweite Scheitel 143 des zweiten Wellenbergs 142 vom Talgrund 123 des Wellentals 122. Zumindest ein Teil der Scheitel kann als Kante ausgebildet sein. Zumindest ein Teil der Wellentäler kann v-förmig ausgebildet sein. Der Normalabstand zwischen Talgrund und Scheitel ist gemäss Fig. 2a für alle Wellenberge der Lage im wesentlichen gleich.

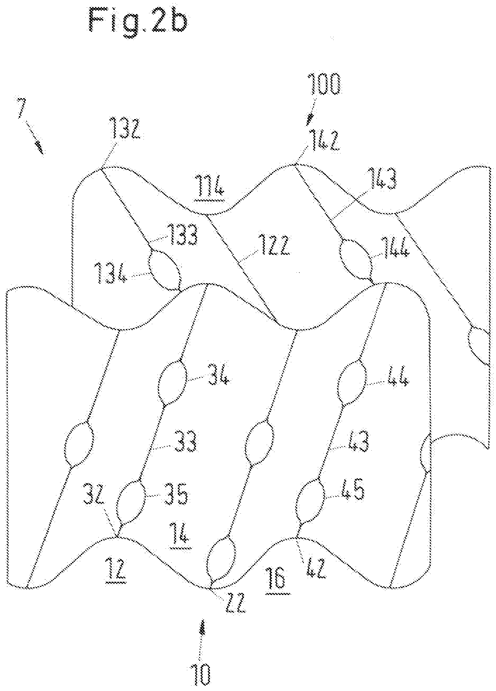

Fig. 2b zeigt zwei benachbarte Lagen einer strukturierten Packung mit wellenartigem Profil, nach welchem die Scheitel keine spitzen Kanten ausbilden, sondern als Rundungen ausgeführt sind. Ansonsten wird auf die Beschreibung der Fig. 2a verwiesen.

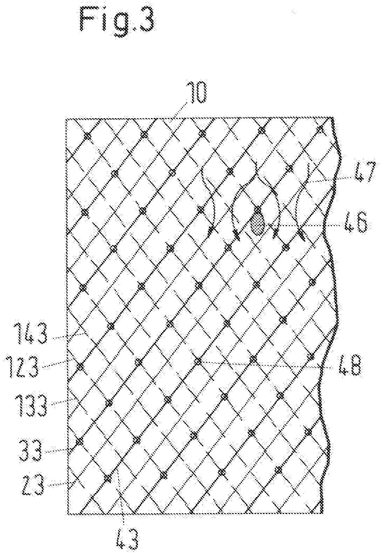

Fig. 3 zeigt den Einfluss der Anordnungen der Kontaktstellen auf die Benetzbarkeit der Oberfläche einer Lage, beispielsweise der Lage 10 der in Fig. 2a oder Fig. 2b dargestellten Packung. Fig. 3a zeigt dabei eine Anordnung gemäss des Standes der Technik. Die Lage 10 überdeckt die nicht sichtbare, weil in der Zeichenebene dahinter liegende Lage 100. Von der Lage 10 sind beispielhaft der erste Scheitel 33, der zweite Scheitel 43 sowie der dazwischen liegende Talgrund 23 gezeigt. Die ersten und zweiten Scheitel 33, 43, sowie der Talgrund 23 bilden Faltkanten aus. Die Scheitel 33, 42 liegen auf dem Talgrund 123 auf, der zur Lage 100 gehört. Selbstverständlich enthalten jede der Lagen 10 und der Lagen 100 jeweils eine Mehrzahl von weiteren Scheiteln und Talgründen, die nicht näher bezeichnet sind, da sie sich von den bezeichneten Scheiteln und Talgründen nicht unterscheiden. In der Fig. 3 sind die zu den Scheiteln der Wellenberge gehörigen Linien dicker ausgezogen, als die zu den Talgründen gehörigen Linien. Des weiteren ist eine langgestrichelte Linie für die Scheitel der Wellenberge der zweiten Lage 100 vorgesehen, sowie eine kurzgestrichelte Linie für die Talgründe der Lage 100. An den Punkten, wo sich ein Talgrund der Lage 10 und ein Scheitel der Lage 100 treffen, entstehen Kontaktstellen 48, die in Fig. 3 mit einem Kreis markiert sind. Die Kontaktstellen sind bei den gezeigten beiden Lagen 10, 100 über die gesamte Oberfläche gleichmässig verteilt.

Aus Fig. 3 ist ersichtlich, dass die Kontaktstellen liegen sehr dicht beieinander liegen, wodurch sich sehr viele kleine Zonen 46 unbenetzter Oberfläche und damit ein relativ grosser Anteil an unbenetzter Oberfläche zur Gesamtpackungsfläche ergeben. In Fig. 3 ist nur eine einzige Zone 46 gezeigt, die Pfeile 47 symbolisieren die Strömung des schwerer flüchtigen Fluids.

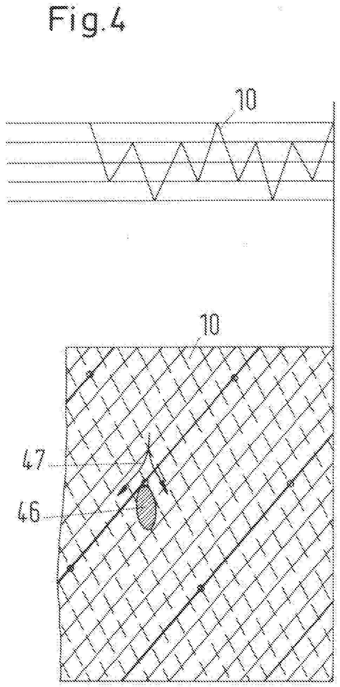

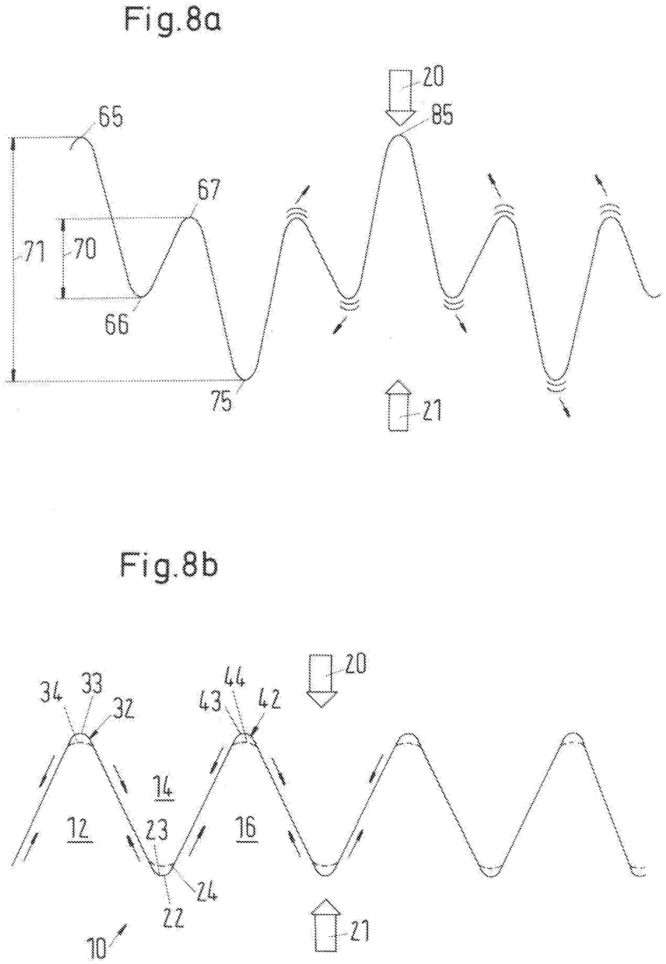

Fig. 4 zeigt den Fall, in welchem die Kontaktstellen beispielsweise durch eine Faltung der Lagen, wie sie in US 6'378'332 B1 vorgeschlagen wird, reduziert sind. Es ergeben sich zwar insgesamt deutlich weniger, dafür aber auch grössere unbenetzte Zonen 46 aufgrund der mittels Pfeilen 47 symbolisierten Strömung des schwerer flüchtigen Fluids. Die Flüssigkeitsströmungen werden in dieser Ausführung weiter ausgelenkt. In der Summe ergibt sich wiederum ein grosser Anteil unbenetzter Oberfläche an der Gesamtoberfläche der Lage 10. Auf die geometrische Form der Lagen gemäss Fig. 4 wird im Detail noch in Fig. 8a eingegangen.

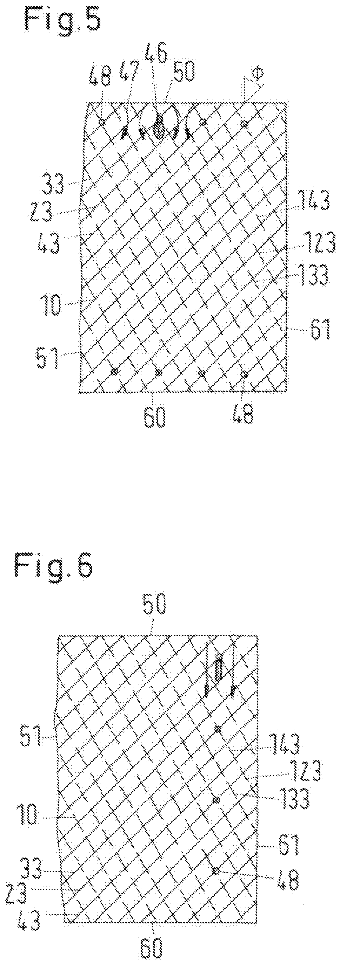

Fig. 5 zeigt eine Anordnung der Kontaktstellen 48 zwischen zwei benachbarten Lagen 10, 100 gemäss der Erfindung. Die Lage 100 ist hinter der Lage 10 angeordnet. Bezüglich der Darstellung wird auf Fig. 3 verwiesen. Die Anzahl der Kontaktstellen ist bezüglich der Oberfläche der Lage 10 verringert. Insbesondere sind die Kontaktstellen nicht gleichmässig über die Oberfläche verteilt.

Werden dagegen die wenigen Kontaktstellen enger zusammen gelegt, bewirkt die Strömungsverengung eine Rückströmung hinter den Kontaktstellen, wodurch wiederum die unbenetzte Fläche hinter der Kontaktstelle reduziert wird. Demzufolge ergeben sich wenige Kontaktstellen mit weniger unbenetzter Fläche und in der Summe ein minimales Verhältnis aus unbenetzter zu gesamter Oberfläche der Lage.

Die Lage 10 umfasst eine erste Randbegrenzung 50, sowie eine zweite Randbegrenzung 60, wobei die erste Randbegrenzung 50 im wesentlichen parallel zur zweiten Randbegrenzung 60 angeordnet ist. Bei vertikaler Ausrichtung der Lage spannt die Randbegrenzung 50 eine obere Grenzfläche auf und die zweite Randbegrenzung 60 eine untere Grenzfläche auf. Des weiteren umfasst die Lage 10 eine erste Randbegrenzung 51 und eine zweite Randbegrenzung 61. Die erste Randbegrenzung 51 und die zweite Randbegrenzung 61 verlaufen bei vertikaler Ausrichtung der Lage in einer Packung benachbart der Innenwand des Stoffaustauschapparats, insbesondere der Kolonne. An zumindest eine der oberen Grenzfläche oder der unteren Grenzflächen kann ein Spalt anschliessen, an welchen zumindest eine weitere Packung angrenzt.

Die Kontaktstellen 48 sind in der Nähe der ersten und/oder zweiten Randbegrenzung 50, 51, 60, 61 angeordnet. An diesen Kontaktstellen berühren sich die benachbarten Lagen. Zwischen diesen Kontaktstellen nahe der Randbegrenzungen werden durch Anbringen von Einbuchtungen weitere Kontaktstellen zumindest teilweise vermieden. Eine Mehrzahl von Einbuchtungen, welche den gleichen Aufbau wie eine der ersten, zweiten oder dritten Einbuchtungen 24, 34, 44 gemäss Fig. 2a oder Fig. 2b haben können, ist zwischen der ersten Randbegrenzung 50, 51 und der zweiten Randbegrenzung 60, 61 angeordnet.

Selbstverständlich können sich Einbuchtungen auch in der Nähe zumindest je einer der ersten und zweiten Randbegrenzungen befinden.

In Fig. 6 ist zudem eine weitere Variante dargestellt, bei der die Kontaktstellen nicht nebeneinander, sondern übereinander angeordnet sind. Auch hier bewirkt eine Flüssigkeitsströmung an den Kontaktstellen herunter eine Minimierung der unbenetzten Fläche zwischen den Kontaktstellen.

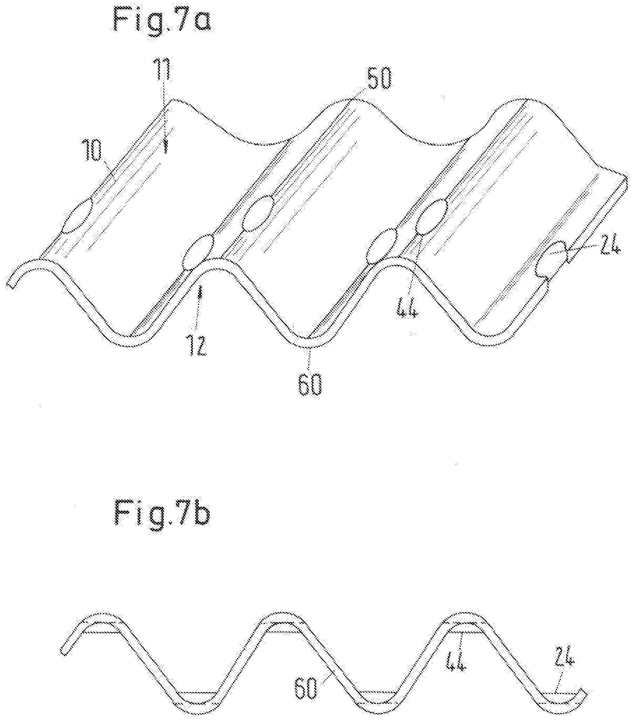

Eine Ansicht einer Lage 10 gemäss der Erfindung ist in Fig. 7a in der Perspektive gezeigt. Fig. 7b ist eine Ansicht der Lage gemäss Fig. 7a in Richtung der Faltung. Die zugehörige strukturierte Packung 1 umfasst die erste Lage 10 und eine zweite Lage 100, wobei die die zweite Lage 100 bevorzugt ein wellenartiges Profil wie die erste Lage 10 aufweist. Die erste Lage 10 und die zweite Lage 100 sind derart angeordnet, dass sich die Kanäle der ersten Lage 10 mit den Kanälen der zweiten Lage 100 kreuzen. Die erste Lage 10 steht mit der zweiten Lage 100 über die Scheitel der den Wellenbergen der ersten Lage 10 gegenüberliegenden Wellentäler der zweiten Lage 100 in berührendem Kontakt. Die ersten und zweiten Scheitel 33, 43, 133, 143 sind auf jeder der ersten und zweiten Lagen 10, 100 angeordnet. Bevorzugt sind die ersten und zweiten Scheitel 33, 43, 133, 143, welche Berührungspunkte ausbilden, wie in Fig. 5 oder Fig. 6 angeordnet. Die Berührungspunkte werden in diesen Figuren mit einem Kreis dargestellt. An den Stellen, an welchen sich kein Kreis befindet, liegt kein Berührungspunkt vor, sondern eine Einbuchtung.

Die zweite Lage 100 ist in Fig. 7 der Einfachheit halber nicht zeichnerisch dargestellt. Die Einbuchtungen 24, 44 der ersten Lage 10 haben in zumindest einem Punkt einen Abstand zu den nicht dargestellten ersten und zweiten Scheiteln der Wellentäler der zweiten Lage 100, die in der Fig. 7 oberhalb angeordnet wäre. Bevorzugt sind die Einbuchtungen 44, die in der Nähe der ersten Randbegrenzung 50 liegen, derart angeordnet, dass sie als Vertiefungen auf einer ersten Seite 11 der Lage 10 ausgebildet sind. Die Einbuchtungen 24, die zwischen der ersten Randbegrenzung 50 und der zweiten Randbegrenzung 60 angeordnet sind, sind als Einbuchtungen auf einer zweiten Seite 13 der Lage 10 ausgebildet. Die erste Seite 11 der Lage 10 ist der zweiten Seite 13 gegenüberliegend angeordnet und bildet je eine Oberfläche der Lage.

Insbesondere können die Einbuchtungen bei vertikaler Ausrichtung der ersten und zweiten Lagen 10, 100 untereinander angeordnet ein. Alternativ dazu oder in Kombination können die Einbuchtungen bei vertikaler Ausrichtung der ersten und zweiten Lagen nebeneinander angeordnet sein.

Entlang eines Scheitels der Lage 10, 100 können auch andere Einbuchtungen angeordnet sein, die nicht oder nicht ausschliesslich als Delle ausgebildet sein müssen. Eine derartige Einbuchtung kann einen Hohlraum umfassen, in welchem ein Einsatzelement mit einem Abstand zum Scheitel der benachbarten Lage aufweisenden Profil enthalten ist. Das Profil ist derart ausgestaltet, dass es zumindest abschnittsweise die normale Faltungshöhe unterschreitet. Unter Faltungshöhe wird der Abstand zwischen einem Wellenberg und einem benachbarten Wellental verstanden. Wenn der Wellenberg an seinem Scheitel eine endliche Krümmung aufweist, ist der Abstand als der Normalabstand der beiden, parallel zueinander liegenden Scheitelpunktstangenten definiert. Wenn die Krümmung unendlich ist, das heisst der Scheitel spitz ist und somit der höchste Punkt keine eindeutig bestimmte Tangente aufweist, wird durch den höchsten Punkt eine Ebene gelegt, die alle Scheitelpunkte einer Seite der Lage enthält. Durch den tiefsten Punkt eines Wellentals wird ebenfalls eine Ebene gelegt, die alle Punkte des Wellentals sowie weiterer Wellentäler enthält. Die beiden Ebenen sollten zueinander parallel liegen. Daraus folgt, dass die Faltungshöhe der Normalabstand zwischen den beiden Ebenen ist.

Einbuchtungen gemäss eines der vorhergehenden Ausführungsbeispiele erstrecken sich über einen Teil des Scheitels oder der Kante. Die Einbuchtungen können durch Umformen, also Eindrücken, Prägen oder Tiefziehen aus dem Rohling für die Lage, beispielsweise einem Packungsblech hergestellt werden. Mit Vorteil werden die Einbuchtungen einseitig auf den Scheiteln der Wellenberge oder der Täler der Faltungen angebracht.

Der Vorteil dieser Anordnung besteht darin, dass ein Rohling endlos lang hergestellt werden kann. Ein derartiger Rohling kann aus Bandmaterial bestehen, beispielsweise als plattenförmiges Blech ausgebildet sein. Aus dem Bandmaterial werden anschliessend Abschnitte bestimmter Länge zugeschnitten. Diese Abschnitte werden beispielsweise durch ein Biegeverfahren in ein wellenartiges Profil umgewandelt. Alternativ dazu kommt Bandmaterial zum Einsatz, welches bereits ein wellenartiges Profil aufweist. Der zugeschnittene Abschnitt mit dem wellenartigen Profil bildet dann die Lage aus. Diesem wellenartigen Profil kann während des Biegevorgangs ein Umformvorgang überlagert werden, sodass während des Biegevorgangs die Einbuchtungen hergestellt werden. Eine erste Lage 10 und eine zweite Lage 100 werden wiederum durch Kehren jedes zweiten wellenartigen Profils passend übereinander gelegt. Zwischen allen Lagen befindet sich zumindest eine Reihe Einbuchtungen in der Nähe der oberen und unteren Randbegrenzung und/oder in der Nähe der seitlichen Randbegrenzungen.

Die Tiefe der Einbuchtungen liegt im Bereich von 10 bis 30% der Lagenhöhe, sodass sich Spalten zwischen den einzelnen Packungslagen von eben diesem Wertebereich ergeben. Die Spalten betragen minimal 1.5 mm für wässrige Systeme. Schmälere Spalten können nachteilig sein, da sich Flüssigkeit, insbesondere Wasser zwischen zwei benachbarten Kanten festsetzen kann, dort verbleiben kann und eine Flüssigkeitsbrücke ausbilden kann.

In Fig. 8a ist eine Lage nach bekannter Bauform mit unterschiedlich hohen Faltungen zur Reduzierung der Kontaktstellen dargestellt. Der Nachteil dieser Bauform besteht darin, dass bei Belastungen auf die Ober- und Unterseite die Lage zusammengestaucht wird, wobei die Pfeile 20, 21 die Richtung der Kraft angeben, in welche die Lage zusammengestaucht wird. Die Faltungen umfassen einen ersten Scheitel 65 sowie einen zweiten Scheitel 85 sowie ein dazwischen liegendes Wellental 75. Die ersten und zweiten Scheitel 65, 85 können mit einer nicht dargestellten benachbarten Lage in Kontakt sein. Zwischen dem ersten Scheitel 65 und dem Talgrund 75 liegen ein Zwischenwellental 66 und ein Zwischenwellenberg 67, die eine Faltung ausbilden. Das Zwischenwellental 66 hat einen Zwischentalgrund 68 und der Zwischenwellenberg 67 hat einen Zwischenscheitel 69. Der Normalabstand 70 zwischen dem Zwischentalgrund 68 und dem Zwischenscheitel 69 ist kleiner als der Normalabstand 71 zwischen dem Scheitel 65 und dem Talgrund 75. Der Normalabstand 70 ist in dem in Fig. 8a gezeigten Ausführungsbeispiel ungefähr halb so gross wie der Normalabstand 71. Durch das Zwischenwellental 66 und den Zwischenwellenberg 67 wird somit eine halbhohe Faltung ausgebildet. Die halbhohe Faltung dient als Knautschzone und kann verformt werden. Durch diese Verformung kann zum einen kein stabiler Packungskörper gebaut werden, zum anderen ist das Einhalten einer festgelegten Lagenhöhe der Packung nicht möglich. Die Lagenhöhe entspricht dem vorhin definierten Normalabstand 71.

Durch eine erfindungsgemässe Bauform kann dieses Problem umgangen werden. Wie Fig. 8b zeigt, lässt sich eine Lage mit Einbuchtungen auf jeder Faltung viel weniger stauchen und die Lage kann somit höheren Belastungen auf Ober- und Unterseite ausgesetzt werden. Dies ermöglicht den Aufbau stabiler Packungskörper und gewährleistet eine im wesentlichen konstante Lagenhöhe zum Erhalt einer spezifizierten Packungsoberfläche.

Zudem steht die Oberfläche der Einbuchtungen für den Stoffaustausch zur Verfügung. Das bedeutet, dass nicht nur im Vergleich mit dem Stand der Technik ein Gewinn an Stoffaustauschfläche zu erwarten ist, sondern auch im Vergleich zu herkömmlichen Packungen, welche sich kreuzende Lagen mit wellenförmigem Profil aufweisen, deren Wellenhöhe konstant ist.

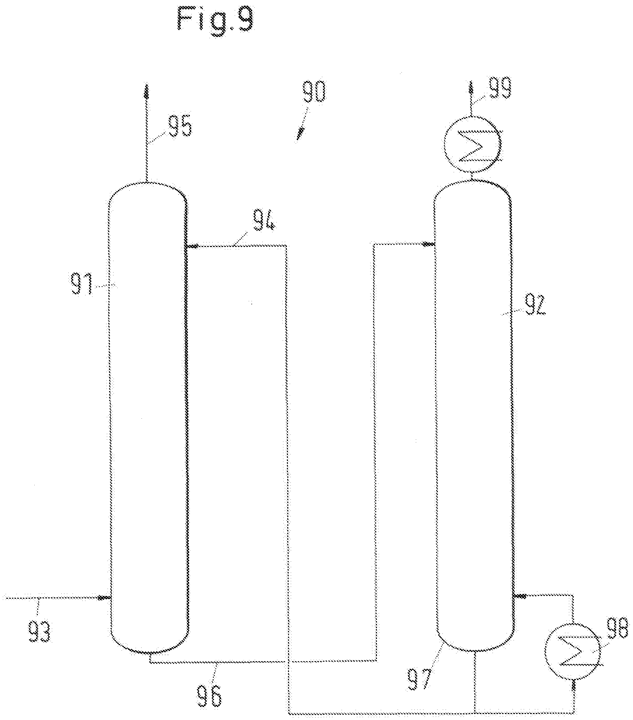

Fig. 9 zeigt eine Absorptionsanlage 90. Die Absorptionsanlage 90 umfasst zwei Stoffaustauschapparate, einen Absorber 91 und einen Desorber 92, welche insbesondere als Kolonnen ausgeführt sind. In der Absorptionsanlage werden im Absorber 91 eine oder mehrere Komponenten aus einem Gasstrom getrennt. Hierzu wird ein flüssiges Lösungsmittel oder Absorptionsmittel eingesetzt. Im Desorber 92 wird das Lösungsmittel oder Absorptionsmittel von den aufgenommenen Komponenten gereinigt.

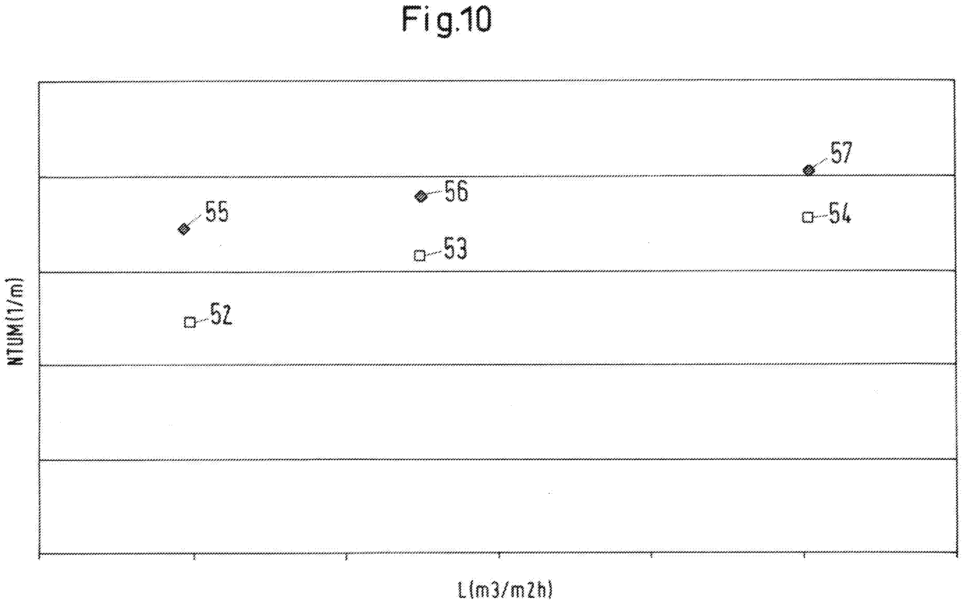

Sowohl Absorption als auch Rektifikation sind Trennverfahren, um aus einem vorliegenden Einsatzstrom 93 eine oder mehr Komponenten heraus zu trennen. Die Rektifikation wird angewandt, um Flüssigkeitsgemische aufgrund unterschiedlicher Siedetemperaturen der einzelnen Komponenten zu trennen wobei unter Rektifikation eine kontinuierliche Destillation zu verstehen ist, die insbesondere mehrere Trennstufen umfasst. Bei der Absorption hingegen werden eine oder mehrere Komponenten aus einem Gasstrom mit Hilfe eines geeigneten Lösungs- oder Absorptionsmittels 94 absorbiert und somit vom Gasstrom getrennt. Das Kopfprodukt des Absorbers 91 ist somit ein gereinigter Gasstrom 95. Das Sumpfprodukt 96 des Absorbers 91 ist ein mit der oder den Komponenten beladenes Absorptionsmittel oder Lösungsmittel. Aus ökonomischen, energetischen oder ökologischen Gründen kann es sinnvoll sein, das Absorptionsmittel oder Lösungsmittel zu reinigen und wieder als gereinigtes Lösungsmittel oder Absorptionsmittel 94 dem Absorber erneut zuzuführen. Die Reinigung des Absorptionsmittels oder Lösungsmittels erfolgt in dem Desorber 92. Das beladene Absorptionsmittel oder Lösungsmittel, also das Sumpfprodukt 96 des Absorbers bildet den Einsatzstrom des Desorbers. Dieser Einsatzstrom wird gemäss Fig. 10 als Flüssigkeit in den Desorber aufgegeben. Der Desorber 92 kann eine oder mehrere Packungen gemäss eines der vorhergehenden Ausführungsbeispielen enthalten. Das beladene Lösungsmittel oder Absorptionsmittel fliesst in Richtung des Sumpfes 95 des Desorbers. Im Sumpf wird das Absorptionsmittel oder Lösungsmittel zumindest teilweise verdampft, wozu ein Sumpfverdampfer 98 vorgesehen ist. Das im Sumpfverdampfer verdampfte Absorptionsmittel oder Lösungsmittel enthält die abzutrennenden Komponenten und nimmt während des Aufsteigens in der Kolonne die abzutrennenden Komponenten aus dem in Richtung des Sumpfes fliessenden Einsatzstroms des beladenen Absorptionsmittels oder Lösungsmittels auf. Somit entsteht im Desorber ein gasförmiger Teilstrom 99, welcher mit den abzutrennenden Komponenten angereichert ist. Diese abzutrennenden Komponenten können entweder thermisch, das heisst durch Kondensation oder über andere nachgeschaltete Trennschritte von dem gasförmigen Teilstrom 99 abgetrennt werden.

Alternativ oder in Ergänzung dazu können Entspannungsvorrichtungen vorgesehen sein, wenn der Desorber bei niedrigerem Druck als der Absorber betrieben werden soll oder Kompressionsvorrichtungen, wenn der Desorber bei höherem Druck als der Absorber betrieben werden muss.

Generell findet bei der Rektifikation der Stofftransport zwischen Gas und Flüssigkeit aufgrund eines Temperaturgefälles vom Sumpf zum Kopf in beiden Richtungen statt. Das schwerersiedende Fluid kondensiert aus der gasförmigen Phase und wird in der Flüssigkeit aufgenommen und das leichtsiedende Fluid verdampft aus der flüssigen Phase in die gasförmige Phase. Bei der Absorption findet der Stofftransport nur in eine Richtung statt, hier wird Gas von der Flüssigkeit absorbiert.

Der Unterschied zwischen Rektifikation und Absorption liegt nun aber darin, dass bei der Rektifikation die Gas- und die Flüssigkeitsströmung miteinander gekoppelt sind, bei der Absorption dagegen beide Ströme voneinander unabhängig eingestellt werden können: Bei der Rektifikation wird eine bestimmte Menge Flüssigkeit verdampft und steigt in Richtung Kolonnenkopf die Kolonne aufwärts. Am Kolonnenkopf wird sämtlicher Dampf kondensiert und zumindest teilweise wieder als Flüssigstrom in die Kolonne zurückgeführt. Die maximal denkbare Flüssigkeitsmenge wäre demnach die gesamte kondensierte Menge Dampf, die am Kolonnenkopf ankommt. Wird mehr Flüssigkeit im Sumpf verdampft, kann auch mehr Flüssigkeit zurückströmen. Insofern sind beide Ströme miteinander gekoppelt und der Stofftransport hängt massgeblich von der Dampfströmung ab. Demzufolge sind Rektifikationsanwendungen in der Regel gasseitig kontrolliert.

Im Gegensatz dazu können in Absorptionsanwendungen mit Hilfe von Pumpen und Gebläsen unterschiedliche Betriebsbedingungen eingestellt werden: eine grosse Absorptionsmittelströmung kann mit einem relativ kleinen Gasstrom in Kontakt gebracht werden oder auch umgekehrt. Zudem können die Absorptionsmittel auf unterschiedliche Weise die Gaskomponenten an sich binden: physikalisch, durch chemische Reaktion oder sowohl physikalisch als auch chemisch. Dabei sind die Auswahl eines Absorptionsmittels oder Lösungsmittels für eine bestimmte Gaskomponente sowie die Konzentrationen in Gas und Flüssigkeit dafür ausschlaggebend, ob der Stofftransport eher gasseitig oder eher flüssigseitig kontrolliert ist.

Um die Anwendbarkeit der erfindungsgemässen Packung zu prüfen, wurde ein Prototyp einer Packung hergestellt, welcher die erfindungsgemässen Einbuchten enthält um die Anzahl der Kontaktpunkte zu reduzieren. Im untersuchten Fall beträgt der durch die Einbuchtung erzeugte Abstand zwischen zwei Scheitelpunkten 2.5 mm. Die Anzahl der Kontaktstellen reduziert sich für den Prototypen von 37'500m⁻³ auf 18'000m⁻³ , somit eine um ungefähr 50% geringere Anzahl an Kontaktstellen gegenüber dem Stand der Technik bei gleichbleibender Gesamtoberfläche von 205m²/m³.

Dieser Prototyp wird mit einer bekannten Packung ohne Einbuchtungen beispielsweise gemäss CH398503 mit gleicher geometrischen Fläche verglichen. Durch die Einbuchtungen wird beim Prototypen die Zahl der Kontaktstellen reduziert. Ausserdem kann das entlang der Kreuzkanäle strömende Gas teilweise als Zweigstrom durch die Einbuchtungen in einen benachbarten Kreuzkanal eingeleitet werden. Aufgrund dieser geänderten Gasströmung ist jedoch beim Prototypen eine eher reduzierte Trennwirkung zu erwarten.

Der oben erwähnte Prototyp wurde zunächst in einer Absorptionskolonne mit 300 mm Innendurchmessser getestet. Dabei wurde Isopropanol aus Luft mit Wasser absorbiert. Hierbei handelt es sich um ein vorwiegend gasseitig kontrolliertes System, ähnlich der Rektifikation. Wie erwartet wurde für den Prototypen eine kleinere Anzahl Übergangseinheiten oder NTUM (number of transfer units per meter) gemessen was in Fig. 10 als eine erste Serie von Messpunkten 52, 53, 54 dargestellt ist. Je grösser die Anzahl NTUM ist, desto leistungsfähiger ist die Packung bezüglich Stoffübergang. Die Darstellung zeigt beispielhaft die NTUM für einen gewählten F-Faktor von 1.5Pa^{0.5} für eine Packung gemäss CH398503 und die erfindungsgemässe Packung. Die Flüssigkeitsbelastung L wurde variiert. Der F-Faktor ist ein Mass für die mittlere Gasgeschwindigkeit in der leeren Kolonne multipliziert mit der Wurzel aus der Dichte des Gases. Der F-Faktor ist proportional zu der kinetischen Energie des Gases. Die Messpunkte 55, 56, 57 für die vorbekannte Packung gemäss CH398503 zeigen einen höheren NTUM Wert als Messpunkte 52, 53, 54 für die erfindungsgemässe Packung.

Diese bisherigen Erkenntnisse deuten also darauf hin, dass die erfindungsgemässe Packung mit reduzierten Kontaktstellen zwar den Druckverlust reduziert, aber zusätzlich auch zu einer Erniedrigung der Trennleistung führt, was anhand der niedrigeren NTUM-Werte aus Fig. 10 ersichtlich ist. Demzufolge scheint eine solche Packung für die Absorption und die Rektifikation ohne Nutzen und unterscheidet sich somit grundlegend von der in US 6'378'322 B1 vorgestellten Packung, welche offenbar vorteilhaft für die Rektifikation ist.

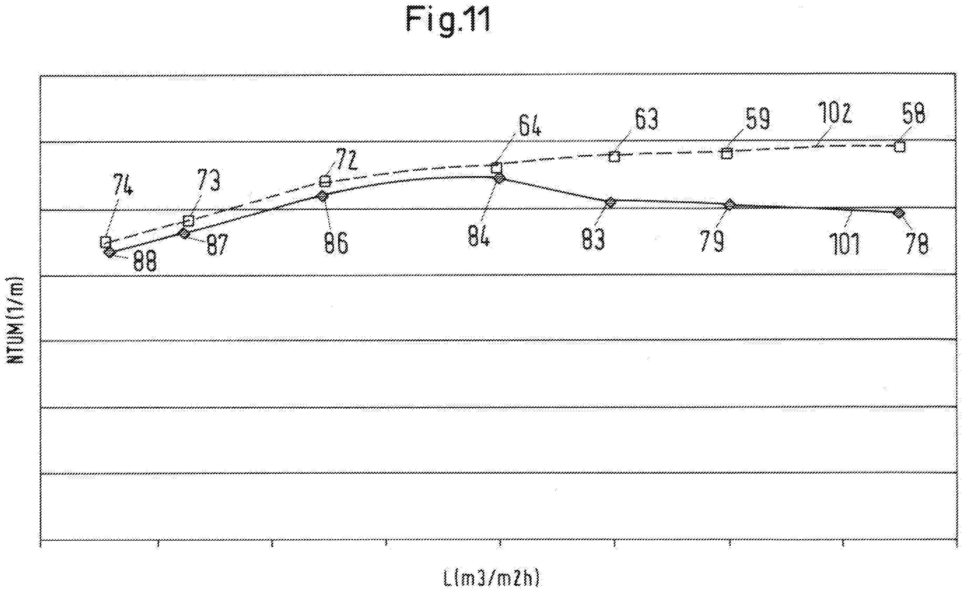

Überraschenderweise hat sich aus weiteren Versuchen ergeben, dass es Stoffsysteme gibt, für welche die erfindungsgemässe Packung eine Verbesserung der Trennleistung ergibt. Das zweite untersuchte Stoffsystem ist die CO₂-Absorption aus Luft mit wässriger Natronlauge (NaOH) , wobei das CO₂ chemisch gebunden wird. Fig. 11 zeigt Messpunkte für dieses System mit dem Prototypen für Flüssigkeitsbelastungen von ca.10 bis 80 m³/m²h, wobei die Messpunkte 58, 59, 63, 64, 72, 73, 74 für den Prototypen einen höheren NTUM Wert aufweisen als die Messpunkte 78, 79, 83, 84, 86, 87, 88 für die vorbekannte Packung. Wie Fig. 11 zeigt, führt die erfindungsgemässe Packung des Prototypen mit reduzierter Anzahl an Kontaktstellen trotz veränderter Gasströmung zu mindestens ebenso guter Trennleistung wie die Referenzpackung. Das bedeutet, die Trennleistung kann in gewissen Systemen tatsächlich durch eine Reduktion der Kontaktstellen und eine geeignete Anordnung der Kontaktstellen verbessert werden. Ebenso lässt sich der Druckverlust durch die Verwendung der erfindungsgemässen Packung vermindern. Die untere Kurve 101 der Fig. 11 zeigt die NTUM für eine marktübliche strukturierte Packung gemäss CH398503 bei zunehmender Belastung des Stoffaustauschapparats mit schwerer flüchtigem Fluid bei einem F-Faktor von 1.5Pa^{0.5}, wobei die Belastung L in m³/m² h auf der x-Achse aufgetragen ist. Die obere Kurve 102 der Fig. 11 zeigt im Vergleich dazu die NTUM für eine strukturierte Packung gemäss der Erfindung. Für alle betrachteten Messpunkte bei gleicher Belastung L ergibt sich, dass NTUM unter Verwendung einer Packung mit Einbuchtungen grösser ist als für eine Packung ohne Einbuchtungen.

Systeme, bei denen die erfindungsgemässe Packung Vorteile aufweist, finden sich vorwiegend in der absorptiven Aufbereitung von Abgasen, in denen mit Hilfe reaktiver, wässriger Lösungen problematische Komponenten dem Abgasstrom entzogen werden sollen. Als Beispiel gilt hier die Absorption von klimaschädlichem CO₂ aus Kraftwerksabgasen mit Hilfe wässriger Absorptionsmittel, welche organische oder anorganische basische Stoffe wie z.B. MEA (Monoethanolamin) oder Pottasche enthalten können.

Die Hypothese, warum eine Reduktion der Kontaktstellen bei gewissen Anwendungen zu einer besseren Absorptionsleistung führt, lautet daher so: durch die schlechten Benetzungseigenschaften der verwendeten Flüssigkeiten bilden sich hinter den Kontaktstellen auf der Packungslage Zonen aus, die gar nicht von der Flüssigkeit benetzt werden. Somit kann die Gesamtoberfläche nicht in vollem Umfang von der Flüssigkeit benutzt werden. Die Flüssigkeit wird an den Kontaktstellen am Weiterfliessen gehindert, wird aufgestaut und zu den Seiten hin abgelenkt. Ähnliches kann man auch feststellen, wenn Wasser als Film auf einer ebenen Fläche herab fliesst und die Strömung plötzlich durch einen eingebrachten Gegenstand (z.B. Finger auf die Ebene gelegt) gestört wird. Hinter dem Gegenstand reisst die Filmströmung auf und es entsteht eine trockene, nicht benetzte Fläche, die erst wieder benetzt wird, wenn der Gegenstand aus der Strömung entfernt wird. Bei Absorptionsanwendungen, bei denen die Aufgrund der erfindungsgemässen Veränderung entstandene verschlechterte Gasströmung keinen negativen Einfluss auf die Trennleistung hat, ergibt sich eine verbesserte Trennleistung. Beim System Isopropanol aus Luft in Wasser, welches gasseitig kontrolliert ist, hat der Grad der Benetzung der Packungsfläche kaum einen Einfluss auf den Stoffaustausch. Dagegen wirkt sich die veränderte Gasströmung ungünstig auf den Stoffaustausch aus. In einem flüssigseitig kontrollierten System, wie CO₂ aus Luft in NaOH bewirkt eine vollständige Benetzung der Packungsfläche eine Erhöhung der NTUM.

## Patentansprüche

1. Absorber oder Desorber enthaltend eine erste Lage (10) für eine strukturierte Packung, welche ein erstes wellenartiges Profil aufweist, wobei durch das erste wellenartige Profil eine Mehrzahl offener Kanäle (12, 14, 16) ausgebildet ist,
wobei die Kanäle ein erstes Wellental (22), einen ersten Wellenberg (32) und einen zweiten Wellenberg (42) umfassen, wobei der erste Wellenberg (32) und der zweite Wellenberg (42) das erste Wellental (22) begrenzen, wobei der erste und der zweite Wellenberg einen ersten gerundeten Scheitel (33) und einen zweiten gerundeten Scheitel (43) aufweisen,
wobei auf dem ersten Scheitel (33) des ersten Wellenbergs (32) eine sich in Richtung des ersten Scheitels (33) erstreckende Einbuchtung (34) ausgebildet ist,
wobei das erste Wellental (22) einen gerundeten Talgrund (23) aufweist, wobei der Normalabstand (27) zumindest eines Punktes der Einbuchtung (34) zum Talgrund (23) des Wellentals (22) kleiner ist als der Normalabstand (28) des ersten Scheitels (33) zum Talgrund (23) des Wellentals (22), wobei auf dem zweiten Scheitel (43) eine zweite Einbuchtung (44) angeordnet ist und auf dem Talgrund (23) eine dritte Einbuchtung (24) angeordnet ist, wobei die ersten, zweiten und dritten Einbuchtungen (24, 34, 44) als linsenförmige Delle ausgebildet sind,
wobei eine zweite Lage (100) vorgesehen ist, die ein zweites wellenartiges Profil aufweist,
wobei die erste Lage (10) und die zweite Lage (100) derart angeordnet sind, dass sich die Kanäle der ersten Lage (10) mit den Kanälen der zweiten Lage (100) kreuzen, wobei die erste Lage (10) mit der zweiten Lage (100) in berührendem Kontakt steht, wobei der berührende Kontakt im Bereich der Einbuchtung (24, 34, 44) unterbrochen ist,
wobei die Tiefe jeder Einbuchtung (24, 34, 44) im Bereich von 10 bis 30% der Lagenhöhe liegt, so dass sich Spalten zwischen den einzelnen Packungslagen von eben diesem Wertebereich ergeben.

2. Absorber oder Desorber nach Anspruch 1, umfassend eine erste Randbegrenzung (50, 51), sowie eine zweite Randbegrenzung (60,61), wobei die erste Randbegrenzung (50, 51) im Wesentlichen parallel zur zweiten Randbegrenzung (60, 61) angeordnet ist.

3. Absorber oder Desorber nach Anspruch 2, wobei die erste, zweite oder dritte Einbuchtung (24, 34, 44) zwischen der ersten Randbegrenzung (50, 51) und der zweiten Randbegrenzung (60, 61) angeordnet ist.

4. Absorber oder Desorber nach einem der vorhergehenden Ansprüche, wobei die Wellenhöhe (28) im Wesentlichen konstant ist.

5. Absorber oder Desorber nach einem der vorhergehenden Ansprüche, wobei die Einbuchtungen (24, 34, 44) auf jeder der ersten und zweiten Lagen (10, 100) angeordnet sind.

6. Absorber oder Desorber nach einem der vorhergehenden Ansprüche, wobei die Einbuchtung (24, 34, 44) innerhalb zumindest einer der ersten oder zweiten Randbegrenzungen (50, 51, 60, 61) ausgebildet ist.

7. Absorber oder Desorber nach einem der vorhergehenden Ansprüche, wobei die Einbuchtungen (24, 34, 44) der ersten Lage (10) mit den Einbuchtungen (24, 34, 44) der zweiten Lage (100) zumindest teilweise überlappend angeordnet sind.

8. Absorber oder Desorber nach einem der vorhergehenden Ansprüche, wobei zumindest eine der ersten oder zweiten Lagen (10, 100) eine Öffnung enthält.

## Claims

1. An absorber or desorber containing a first layer (10) for a structured packaging, which layer has a first wave-like profile, wherein a plurality of open channels (12, 14, 16) is formed by the first wave-like profile, wherein the channels comprise a first wave trough (22), a first wave crest (32) and a second wave crest (42), wherein the first wave crest (32) and the second wave crest (42) delimit the first wave trough (22), wherein the first and second wave crests have a first rounded vertex (33) and a second rounded vertex (43), wherein an indentation (34) extending in the direction of the first vertex (33) is formed on the first vertex (33) of the first wave crest (32), wherein the first wave trough (22) has a rounded trough bottom (23), wherein the normal distance (27) of at least one point of the indentation (34) from the trough bottom (23) of the wave trough (22) is smaller than the normal distance (28) of the first vertex (33) from the trough bottom (23) of the wave trough (22), wherein a second indentation (44) is arranged on the second vertex (43) and a third indentation (24) is arranged on the trough bottom (23), wherein the first, second and third indentations (24, 34, 44) are designed as lenticular dents, wherein a second layer (100) is provided which has a second wave-like profile, wherein the first layer (10) and the second layer (100) are arranged in such a way that the channels of the first layer (10) intersect the channels of the second layer (100), wherein the first layer (10) is in touching contact with the second layer (100), wherein the touching contact is interrupted in the region of the indentation (24, 34, 44), wherein the depth of each indentation (24, 34, 44) is in the range of from 10 to 30% of the layer height, resulting in gaps between the individual packaging layers of precisely this range of values.

2. The absorber or desorber according to claim 1, comprising a first edge delimitation (50, 51) and a second edge delimitation (60, 61), wherein the first edge delimitation (50, 51) is arranged substantially parallel to the second edge delimitation (60, 61).

3. The absorber or desorber according to claim 2, wherein the first, second or third indentation (24, 34, 44) is arranged between the first edge delimitation (50, 51) and the second edge delimitation (60, 61).

4. The absorber or desorber according to one of the preceding claims, wherein the wave height (28) is substantially constant.

5. The absorber or desorber according to one of the preceding claims, wherein the indentations (24, 34, 44) are arranged on each of the first and second layers (10, 100).

6. The absorber or desorber according to one of the preceding claims, wherein the indentation (24, 34, 44) is formed within at least one of the first or second edge delimitations (50, 51, 60, 61).

7. The absorber or desorber according to one of the preceding claims, wherein the indentations (24, 34, 44) of the first layer (10) are arranged so as to at least partially overlap with the indentations (24, 34, 44) of the second layer (100).

8. The absorber or desorber according to one of the preceding claims, wherein at least one of the first or second layers (10, 100) contains an opening.

## Revendications

1. Absorbeur ou désorbeur comprenant une première couche (10) destinée à un garnissage structuré, lequel comporte un premier profil ondulé, dans lequel, à l'aide du premier profil ondulé, une pluralité de canaux (12, 14, 16) ouverts sont formés, dans lequel les canaux comprennent un premier creux d'onde (22), une première crête d'onde (32) et une seconde crête d'onde (42), dans lequel la première crête d'onde (32) et la seconde crête d'onde (42) délimitent le premier creux d'onde (22), dans lequel la première et la seconde crête d'onde comportent un premier sommet (33) arrondi et un second sommet (43) arrondi, dans lequel, sur le premier sommet (33) de la première crête d'onde (32), un enfoncement (34) s'étendant dans le sens du premier sommet (33) est formé , dans lequel le premier creux d'onde (22) comporte un fond de creux (23) arrondi, dans lequel la distance normale (27) entre au moins un point de l'enfoncement (34) et le fond de creux (23) du creux d'onde (22) est inférieur à la distance normale (28) entre le premier sommet (33) et le fond de creux (23) du creux d'onde (22), dans lequel un deuxième enfoncement (44) est disposé sur le second sommet (43) et un troisième enfoncement (24) est disposé sur le fond de creux (23), dans lequel les premier, deuxième et les troisième enfoncements (24, 34, 44) sont conçus sous la forme d'une encoche lenticulaire, dans lequel une seconde couche (100) est située, laquelle comporte un second profil ondulé, dans lequel la première couche (10) et la seconde couche (100) sont disposées de telle sorte que les canaux de la première couche (10) se croisent avec les canaux de la seconde couche (100), dans lequel la première couche (10) se trouve en contact avec la seconde couche (100), dans lequel le contact est interrompu dans la zone de l'enfoncement (24, 34, 44), dans lequel la profondeur de chaque enfoncement (24, 34, 44) est dans la plage comprise entre 10 et 30 % de la hauteur de la couche de telle sorte que les fentes entre les couches de garnissage individuelles résultent de ladite plage de valeurs.

2. Absorbeur ou désorbeur selon la revendication 1, comprenant une première délimitation de bord (50, 51), ainsi qu'une seconde délimitation de bord (60, 61), dans lequel la première délimitation de bord (50, 51) est disposée sensiblement parallèle à la seconde délimitation de bord (60, 61).

3. Absorbeur ou désorbeur selon la revendication 2, dans lequel les premier, deuxième ou troisième enfoncements (24, 34, 44) sont disposés entre la première délimitation de bord (50, 51) et la seconde délimitation de bord (60, 61).

4. Absorbeur ou désorbeur selon l'une quelconque des revendications précédentes, dans lequel la hauteur des ondes (28) est sensiblement constante.

5. Absorbeur ou désorbeur selon l'une quelconque des revendications précédentes, dans lequel les enfoncements (24, 34, 44) sont disposés respectivement sur des première et seconde couches (10, 100).

6. Absorbeur ou désorbeur selon l'une quelconque des revendications précédentes, dans lequel l'enfoncement (24, 34, 44) est conçu dans au moins l'une des première ou seconde délimitations de bord (50, 51, 60, 61).

7. Absorbeur ou désorbeur selon l'une quelconque des revendications précédentes, dans lequel les enfoncements (24, 34, 44) de la première couche (10) sont disposés au moins partiellement superposées par rapport aux enfoncements (24, 34, 44) de la seconde couche (100).

8. Absorbeur ou désorbeur selon l'une quelconque des revendications précédentes, dans lequel l'au moins une des première ou seconde couches (10, 100) comprennent une ouverture.
